# EUROPEAN PATENT APPLICATION

(11) **EP 4 779 517 A1**
(43) Date of publication of application: **22.07.2026**
(21) Application number: 24864646.5
(22) Date of filing: 11.09.2024
(51) Int. Cl.: G06K 19/06, G06F 3/0482, G06F 3/04845

(54) **INFORMATION-CODE GENERATION METHOD AND APPARATUS, AND COMPUTER DEVICE AND STORAGE MEDIUM**

(30) Priority: 11.09.2023 CN 202311167497
(71) Applicant: Beijing Zitiao Network Technology Co., Ltd., Beijing 100190 (CN)
(72) Inventor: OUYANG, Bingjie, Beijing 100028 (CN); LU, Mengsi, Beijing 100028 (CN); LI, Jianzhao, Beijing 100028 (CN)
(74) Representative: Marks & Clerk LLP
(86) International application number: PCT/CN2024/118184
(87) International publication number: WO 2025/055930

(57) **Abstract**

An information-code generation method and apparatus, and a computer device and a storage medium. The method comprises: in response to a first trigger operation on a preset interface of a preset application program, presenting a special-effect information-code generation interface (S101); acquiring identification information corresponding to an initial information code of a current user in the preset application program, and a target image, which is determined on the special-effect information-code generation interface by the current user and is used for generating a special-effect information code (S102); in response to a second trigger operation on the special-effect information-code generation interface, acquiring and presenting a first special-effect information code, which is generated on the basis of the initial information code and the target image, wherein an image of the first special-effect information code is obtained by means of performing stylization processing on the target image on the basis of the identification information corresponding to the initial information code (S103); and posting media content in the preset application program on the basis of the first special-effect information code and/or updating association information of the current user in the preset application program on the basis of the first special-effect information code (S104).

## Description

The present application claims priority to Chinese Patent Application No. 202311167497.1, filed on September 11, 2023, which is incorporated herein by reference in its entirety as a part of the present application.

### TECHNICAL FIELD

The present disclosure relates to a method and an apparatus for information code generation, a computer device, and a storage medium.

### BACKGROUND

In an era of rapid development of the Internet and continuous upgrading of mobile terminals, an information code, as a technology for recording data information by means of geometric patterns, has been applied to various aspects of people's daily life. For example, on some information sharing platforms, users may establish an association relationship by scanning personal information codes.

### SUMMARY

Embodiments of the present disclosure provide at least an information code generation method and apparatus, a computer device, and a storage medium.

In a first aspect, an embodiment of the present disclosure provides an information code generation method, including:
displaying an effect information code generation interface in response to a first trigger operation on a preset interface of a preset application;
obtaining identification information corresponding to an initial information code of a current user in the preset application and a target image that is determined by the current user on the effect information code generation interface and used for generating an effect information code;
obtaining and displaying a first effect information code generated based on the initial information code and the target image in response to a second trigger operation on the effect information code generation interface, an image of the first effect information code being obtained by performing stylization processing on the target image based on the identification information corresponding to the initial information code; and
posting media content in the preset application based on the first effect information code and/or updating associated information of the current user in the preset application based on the first effect information code.

In an optional implementation, an image selection area is displayed on the effect information code generation interface, and a plurality of first preview images are displayed in the image selection area;
and
obtaining the target image that is determined by the current user on the effect information code generation interface and used for generating the effect information code includes:
determining a target first preview image selected by a user from the plurality of first preview images displayed in the image selection area, and using an original image corresponding to the target first preview image as the target image.

In an optional implementation, the method further includes:
updating, in response to a slide switching operation in the image selection area, the first preview images that is displayed.

In an optional implementation, an image selection control is further displayed on the effect information code generation interface; and
determining the target image selected by the user on the effect information code generation interface and used for generating the effect information code includes:
displaying a plurality of second preview images in response to a trigger operation on the image selection control, the plurality of second preview images including the plurality of first preview images and at least one other preview image; and
determining a target second preview image selected by the user from the plurality of second preview images, and using an original image corresponding to the target second preview image as the target image.

In an optional implementation, an effect information code generation control is displayed on the effect information code generation interface, and the second trigger operation is a trigger operation on the effect information code generation control.

In an optional implementation, a plurality of style options are displayed on the effect information code generation interface, and performing the stylization processing on the target image based on the identification information corresponding to the initial information code includes:
determining a style attribute corresponding to a target style option in response to a user determining the target style option from the plurality of style options; and
performing the stylization processing on the target image based on the identification information corresponding to the initial information code and the style attribute.

In an optional implementation, the preset interface includes a personal information page of the user in the preset application; and
displaying the effect information code generation interface in response to the first trigger operation on the preset interface of the preset application includes:
displaying the effect information code generation interface in response to a trigger operation on an information code identification on the personal information page.

In an optional implementation, the preset interface includes an information code display interface, the information code display interface including the initial information code and a first information code update control in a first style, the first information code update control being configured to display the effect information code generation interface after being triggered; and
displaying the effect information code generation interface in response to the first trigger operation on the preset interface of the preset application includes:
displaying the effect information code generation interface of the user in response to a trigger operation on the first information code update control.

In an optional implementation, before displaying the effect information code generation interface, the method further includes:
displaying effect information code function guide information in response to meeting a target guide condition, the effect information code function guide information being configured to guide a user to enter the effect information code generation interface or the information code display interface.

In an optional implementation, the preset interface includes an information code display interface, the information code display interface including a second information code update control in a second style, the second information code update control including a second effect information code that has been generated and/or saved by the current user in the preset application.

In an optional implementation, displaying the effect information code generation interface in response to the first trigger operation on the preset interface of the preset application includes:
displaying an information code selection interface in response to a trigger operation on the second information code update control, a creation control and a historical effect information code that has been generated and/or saved being displayed on the information code selection interface, the historical effect information code including at least the second effect information code; and
displaying the effect information code generation interface in response to a trigger operation on the creation control.

In an optional implementation, the method further includes:
in response to a select and use operation on any of the historical effect information code, using the historical effect information code that is selected as an information code in the associated information of the user in the preset application.

In an optional implementation, the preset interface includes a media content display page; and
displaying the effect information code generation interface in response to the first trigger operation on the preset interface includes:
displaying the effect information code generation interface in response to a trigger operation on an effect information code function entry on the media content display page.

In an optional implementation, displaying the effect information code generation interface in response to the trigger operation on the effect information code function entry on the media content display page includes:
displaying an effect information code work page of a media content posting user in response to the trigger operation on the effect information code function entry, and displaying, on the effect information code work page, a guide control indicating entry into the effect information code generation interface; and
displaying the effect information code generation interface in response to a trigger operation on the guide control.

In an optional implementation, posting the media content in the preset application based on the first effect information code includes:
displaying a posting interface including the first effect information code, the posting interface being configured to obtain posting attribute information and/or information code description information;
   and
posting, in response to a posting trigger operation on the posting interface, the media content including the first effect information code according to information obtained on the posting interface.

In an optional implementation, after obtaining the first effect information code, the method further includes:
displaying setting indication information for setting an information code in the associated information,
the setting indication information being configured to indicate setting the first effect information code as the information code in the associated information of the user in the preset application.

In an optional implementation, displaying the setting indication information includes:
displaying the setting indication information after generating the first effect information code on the effect information code generation interface; or
displaying the setting indication information on the media content display page after posting the media content including the first effect information code.

In an optional implementation, after obtaining the first effect information code, the method further includes:
displaying save indication information indicating saving the first effect information code; and
saving the first effect information code in the historical effect information code of the user in response to a save trigger operation.

In an optional implementation, the save indication information is configured to indicate saving by triggering, in accordance with a target trigger mode, the effect information code generation control on the effect information code generation interface, the target trigger mode being different from a trigger mode of the second trigger operation.

In an optional implementation, obtaining and displaying the first effect information code generated based on the initial information code and the target image includes:
obtaining and displaying a plurality of candidate first effect information codes generated based on the initial information code and the target image, images of the plurality of candidate first effect information codes being obtained by performing different types of stylization processing on the target image based on the identification information corresponding to the initial information code; and
determining a target effect information code selected by the user from the plurality of candidate first effect information codes, the target effect information code being configured as the effect information code when the media content is posted and/or the associated information is updated.

In a third aspect, an embodiment of the present disclosure further provides a computer device, including: a processor, a memory, and a bus, the memory storing machine-readable instructions executable by the processor, the processor communicating with the memory through the bus when the computer device is running, the machine-readable instructions, when executed by the processor, causing the steps in the first aspect or any optional implementation in the first aspect to be performed.

In a fourth aspect, an embodiment of the present disclosure further provides a computer-readable storage medium, a computer program being stored on the computer-readable storage medium, the computer program, when executed by a processor, causing the steps in the first aspect or any optional implementation in the first aspect to be performed.

In order to make the above objects, features, and advantages of the present disclosure more comprehensible, preferred embodiments are described in detail below with reference to the drawings.

### BRIEF DESCRIPTION OF DRAWINGS

In order to more clearly explain the technical solutions in the embodiments of the present disclosure, the drawings required in the embodiments will be briefly described below. The drawings herein are incorporated into and constitute a part of this specification. These drawings illustrate embodiments consistent with the present disclosure and are used in conjunction with the specification to explain the technical solutions of the present disclosure. It should be understood that the following drawings show only some embodiments of the present disclosure and therefore should not be regarded as limiting the scope. For those of ordinary skill in the art, other related drawings may be obtained from these drawings without creative efforts.
Fig. 1 shows a flowchart of an information code generation method provided by an embodiment of the present disclosure;
Fig. 2 shows a flowchart of a method for a user to trigger an information code generation method from a personal information page for the first time in the information code generation method provided by the embodiment of the present disclosure;
Fig. 3 shows a schematic diagram of a personal information page of a user in a current preset application in the information code generation method provided by the embodiment of the present disclosure;
Fig. 4 shows a schematic diagram of displaying effect information code function guide information in the information code generation method provided by the embodiment of the present disclosure;
Fig. 5 shows a schematic diagram of an information code display interface in the information code generation method provided by the embodiment of the present disclosure;
Fig. 6 shows a schematic diagram of an effect information code generation interface in the information code generation method provided by the embodiment of the present disclosure;
Fig. 7 shows a schematic diagram of an interface after the generation of a first effect information code is completed in the information code generation method provided by the embodiment of the present disclosure;
Fig. 8 shows a schematic diagram of a display interface of the first effect information code in the information code generation method provided by the embodiment of the present disclosure;
Fig. 9 shows a schematic diagram of a posting interface of the first effect information code in the information code generation method provided by the embodiment of the present disclosure;
Fig. 10 shows a schematic diagram of a media content display page in the information code generation method provided by the embodiment of the present disclosure;
Fig. 11 shows a schematic diagram of another information code display interface in the information code generation method provided by the embodiment of the present disclosure;
Fig. 12 shows a schematic diagram of an information code selection interface in the information code generation method provided by the embodiment of the present disclosure;
Fig. 13 shows a schematic diagram of a preview interface of the first effect information code in the information code generation method provided by the embodiment of the present disclosure;
Fig. 14 shows a schematic diagram of another information code display interface in the information code generation method provided by the embodiment of the present disclosure;
Fig. 15 shows a flowchart of a method for a user to trigger an information code generation method from a personal information page not for the first time in the information code generation method provided by the embodiment of the present disclosure;
Fig. 16 shows a schematic diagram of another information code selection interface in the information code generation method provided by the embodiment of the present disclosure;
Fig. 17 shows a flowchart of a method for a user to trigger an information code generation method from a media content display page in the information code generation method provided by the embodiment of the present disclosure;
Fig. 18 shows a schematic diagram of a media content display page in the information code generation method provided by the embodiment of the present disclosure;
Fig. 19 shows a schematic diagram of an effect information code work page in the information code generation method provided by the embodiment of the present disclosure;
Fig. 20 shows a schematic diagram of an information code generation apparatus provided by an embodiment of the present disclosure; and
Fig. 21 shows a schematic diagram of a computer device provided by an embodiment of the present disclosure.

### DETAILED DESCRIPTION

In order to make the purposes, technical solutions and advantages of the embodiments of the present disclosure more clear, the technical solutions in the embodiments of the present disclosure will be described clearly and completely below in combination with the drawings in the embodiments of the present disclosure. Obviously, the described embodiments are only part of the embodiments of the present disclosure, not all of them. The components of the embodiments of the present disclosure, which are generally described and illustrated in the drawings herein, may be arranged and designed in various different configurations. Therefore, the following detailed description of the embodiments of the present disclosure provided in the drawings is not intended to limit the scope of the claimed disclosure, but only represents the selected embodiments of the present disclosure. Based on the embodiments in the present disclosure, all other embodiments obtained by those skilled in the art without creative efforts belong to the protection scope of the present disclosure.

It may be understood that before using the technical solutions disclosed in the embodiments of the present disclosure, the user shall be informed of the type, scope of use, use scenario, etc. of personal information involved in the present disclosure and obtain the authorization of the user in an appropriate way in accordance with relevant laws and regulations.

For example, in response to receiving an active request from a user, prompt information is sent to the user to clearly prompt the user that the requested operation will require access to and use of the user's personal information. In this way, the user may independently choose whether to provide personal information to software or hardware, such as an electronic device, an application, a server or a storage medium, that performs the operations of the technical solutions of the present disclosure based on the prompt information.

As an optional but non-limiting implementation, in response to receiving an active request from a user, the manner of sending prompt information to the user may be, for example, a pop-up window, and the prompt information may be presented in the pop-up window in text. In addition, the pop-up window may also carry a selection control for the user to choose whether to "agree" or "disagree" to provide personal information to the electronic device.

It may be understood that the above process of notifying and obtaining user authorization is only illustrative and does not limit the implementation of the present disclosure. Other manners that satisfy relevant laws and regulations may also be applied to the implementation of the present disclosure.

After research, it is found that as a technology for recording data information by means of geometric patterns, information codes have been applied to various aspects of people's daily life. For example, in some preset applications, such as an application platform for posting work content or an information sharing platform, users may establish a relationship by scanning personal information codes. For example, when a user performs an operation of adding a friend in a preset application, it may be completed by scanning a personal information code corresponding to the other party.

However, on the preset application, the expression form and interaction mode of the user's personal information code are relatively single. For example, in the case of using a QR (Quick Response) type two-dimensional code, only the pattern of the two-dimensional code and the user avatar may be concatenated and displayed (for example, the user image is placed in the middle of the QR code for display).

Based on the above research, the embodiments of the present disclosure provide a function of generating an effect information code in a preset application. When a user performs a first trigger operation on a preset interface of the preset application, an effect information code generation interface is displayed. On this interface, the user may perform a second trigger operation for generating the effect information code. By obtaining information corresponding to an initial information code of the current user in the preset application and a target image determined by the user for generating a corresponding effect information code, a first effect information code obtained by performing stylization processing on the target image is generated, and then the generated first effect information code may be updated to associated information of the current user in the preset application. Since the first effect information code is determined based on the information corresponding to the initial information code and the target image, the finally obtained first effect information code may not only record the information corresponding to the user's initial information code, but also reflect an image feature of the stylized target image. Therefore, on the premise that the finally generated first effect information code may achieve the same function as the initial information code, the generation and use efficiency of a personalized information code is improved, and a visual effect that the information code is integrated into the stylized target image is presented. After the generation of the first effect information code is completed, the first effect information code may also be posted as a work in a way of posting media content, or it may be updated to the associated information of the user in the preset application, that is, a personal information code, so as to better enrich interaction manners of the user and enrich interaction manners in the preset application. The defects described above are all obtained by the inventor after practice and careful study. Therefore, the discovery process of the above problems and the solutions to the above problems proposed by the present disclosure below should be the contributions made by the inventor to the present disclosure in the process of the present disclosure.

The technical solutions in the present disclosure will be described clearly and completely below in combination with the drawings in the present disclosure. Obviously, the described embodiments are only part of the embodiments of the present disclosure, not all of them. The components of the present disclosure, which are generally described and illustrated in the drawings herein, may be arranged and designed in various different configurations. Therefore, the following detailed description of the embodiments of the present disclosure provided in the drawings is not intended to limit the scope of the claimed disclosure, but only represents the selected embodiments of the present disclosure. Based on the embodiments in the present disclosure, all other embodiments obtained by those skilled in the art without creative efforts belong to the protection scope of the present disclosure.

It should be noted that similar reference numerals and letters represent similar items in the following drawings, and therefore, once an item is defined in one drawing, it does not need to be further defined and explained in subsequent drawings.

In order to facilitate the understanding of the embodiments, an information code generation method disclosed in the embodiments of the present disclosure is first introduced in detail. The execution body of the information code generation method provided by the embodiments of the present disclosure is generally a computer device with a certain computing power, for example, the computer device includes a terminal device, a server, or other processing devices. The terminal device may be a user equipment (User Equipment, UE), a mobile device, a user terminal, a terminal, a cellular phone, a cordless phone, a personal digital assistant (Personal Digital Assistant, PDA), a handheld device, a computing device, a vehicle-mounted device, a wearable device, etc. In some possible implementations, the information code generation method may be implemented by a processor calling computer-readable instructions stored in a memory.

The information code generation method provided by the embodiments of the present disclosure is described below by taking the execution body being a terminal device as an example.

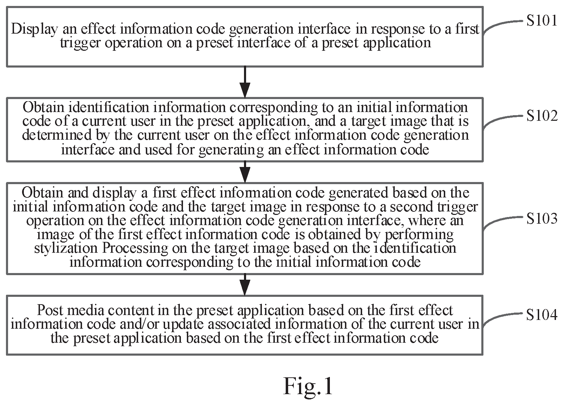

Fig. 1 is a flowchart of an information code generation method according to an embodiment of the present disclosure. The method includes steps S101 to S104.

S101: displaying an effect information code generation interface in response to a first trigger operation on a preset interface of a preset application.

Here, the preset interface may be any interface that may be triggered to enter the effect information code generation interface, for example, it may be a personal information page of a current user in the preset application, or may be a post information interface of the preset application, and may also be an information code display interface of the current user, etc.

In the embodiment of the present disclosure, an image selection area may be provided on the effect information code generation interface, and a plurality of first preview images may be displayed in the image selection area, and a user may select among them to determine a target image for generating a first effect information code; where, the first preview images may be image information pre-saved locally by the user, and may also be image information pre-saved by the user in the current preset application. It should be noted that since the first preview images here may be in the form of thumbnails, in order to ensure the image quality, an original image of a target first preview image may be used as the target image; the original image of the target first preview image may have a higher resolution and contain more details and pixels than the target first preview image. The image selection area may also support the function of slide switching display of images, or the function of displaying more preview images through an image selection control, which will be described in detail in the following embodiments.

S102: obtaining information corresponding to an initial information code of the current user in the preset application and the target image that is determined by the current user on the effect information code generation interface and used for generating an effect information code.

In this step, data information corresponding to the initial information code of the user in the current preset application and the target image determined by the user on the effect information code generation interface may be obtained to generate the first effect information code.

In the embodiment of the present disclosure, identification information corresponding to the user's initial information code may be obtained to generate the first effect information code. Exemplarily, the identification information corresponding to the initial information code may be in the form of encoded data, so that after the user selects the target image, the target image is stylized based on the target style option selected by the user and the initial information code, so that the processed first effect information code may record the information of the initial information code, and at the same time, the stylized features of the target image may be reflected from the external performance.

S103: obtaining and displaying a first effect information code generated based on the initial information code and the target image in response to a second trigger operation on the effect information code generation interface, an image of the first effect information code being obtained by performing stylization processing on the target image based on the identification information corresponding to the initial information code.

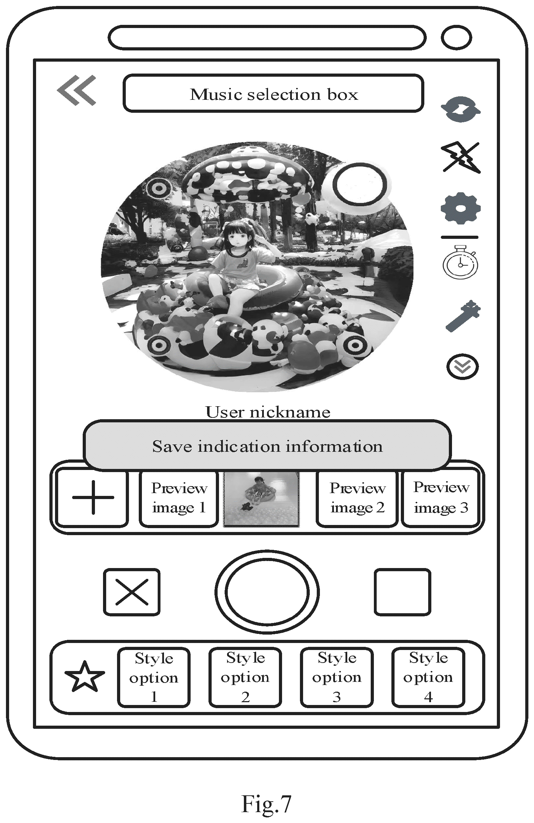

In this step, after the user completes the selection of the target image, by triggering an effect information code generation control on the effect information code generation interface or through other preset trigger operations (such as a long press on the target image, etc.), the current preset application is instructed to generate and display the first effect information code based on the target image and the obtained identification information corresponding to the initial information code, where an image feature of the first effect information code is obtained by performing stylization processing on the target image based on the identification information corresponding to the initial information code. It may be understood that the first effect information code in the present application is actually implemented by fusing the identification information corresponding to the initial information code into the stylized target image. From the external performance, the first effect information code image may include a positioning pattern of an information code, but the image of the first effect information code may have no obvious barcode structure. Taking the first effect information code being a QR code as an example, the image of the first effect information code still includes at least three positioning patterns (see three small circles in the upper left corner, the lower left corner, and the lower right corner and one large circle in the upper right corner of the first effect information code in Fig. 7), but the main body of the image of the first effect information code is displayed as a stylized target image, without showing an obvious barcode structure.

S104: posting media content in the preset application based on the first effect information code and/or updating associated information of the current user in the preset application based on the first effect information code.

After the generation of the first effect information code is completed, on the one hand, the effect information code may be posted as the user's work, that is, media content, on the other hand, the first effect information code may also be set as a personal information code in the associated information of the user in the preset application. The following embodiments will further illustrate these two application manners.

With the above embodiment, the function of generating the first effect information code may be provided in the preset application, and the obtained first effect information code may not only record the information corresponding to the user's initial information code, but also reflect the image feature of the stylized target image. Therefore, on the one hand, it is ensured that the finally generated first effect information code may achieve the same function as the initial information code, on the other hand, the generation and use efficiency of a personalized information code is improved, and a visual effect that the information code is integrated into the stylized target image is presented. In addition, after the generation of the first effect information code is completed, the first effect information code may also be posted as a work in a way of posting media content or updated to the personal information code of the user in the preset application, thus enriching interaction manners of the user in the preset application.

This embodiment is described by taking the case where the personal information page of the preset application is used as an effect information code function entry and the user uses the effect information code function for the first time as an example.

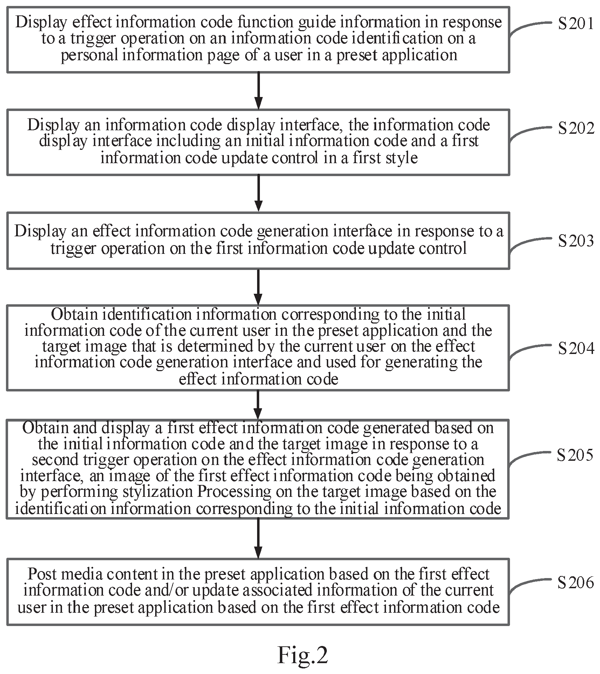

Fig. 2 is a flowchart of an information code generation method according to an embodiment of the present disclosure. The method includes steps S201 to S206. It should be noted that these steps are listed for the clarity of the process description, and some of the steps are not necessarily performed, such as the following S201, which may be replaced by other steps in some cases, that is, the information code display interface of S202 may be entered through other function entries.

S201: displaying effect information code function guide information in response to a trigger operation on an information code identification on a personal information page of a user in a preset application.

In the embodiment of the present disclosure, it corresponds to the user triggering the generation of the effect information code from the personal information page for the first time.

In this step, the effect information code generation interface may be displayed after the user triggers the information code identification on the personal information page of the preset application. Since the effect information code function is used for the first time, after the information code identification is triggered, the effect information code function guide information may be displayed first. The effect information code function guide information is configured to guide the user to enter the subsequent step of generating the effect information code. Exemplarily, the effect information code function guide information may guide the user to enter the effect information code generation interface or the information code display interface.

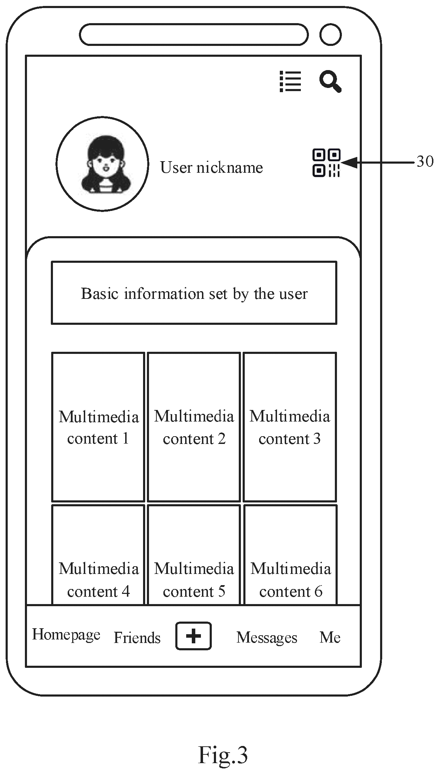

In a specific implementation, Fig. 3 is a schematic diagram of a personal information page of a user in a current preset application. As shown in Fig. 3, the personal information page includes an information code identification 30, and the user may enter the information code display interface by triggering the information code identification.

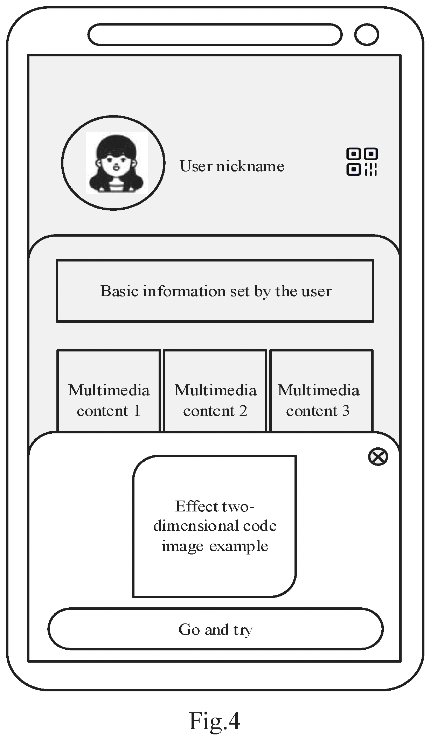

In the embodiment of the present disclosure, in the case that a target guide condition is met, the effect information code function guide information may be displayed. The target guide condition here may be, for example, being used for the first time (may have been guided but have not used the effect information code function), and for another example, being guided for the first time (have not used the effect information code function). Here, in the case that the user generates the effect information code for the first time, after the information code identification is triggered and before the information code display interface is entered, the effect information code function guide information as shown in Fig. 4 may be displayed; where, the effect information code function guide information may further include an effect information code function guide control ("Go and try" as shown in Fig. 4), and an image example of the effect information code, so as to intuitively show the user the effect of the finally generated effect information code. It should be noted that the presentation manner of the effect information code function guide information may be a pop-up window as shown in Fig. 4, or any other form, such as switching and updating the current personal information page to an interface containing the effect information code function guide information.

S202: displaying an information code display interface, the information code display interface including an initial information code and a first information code update control in a first style.

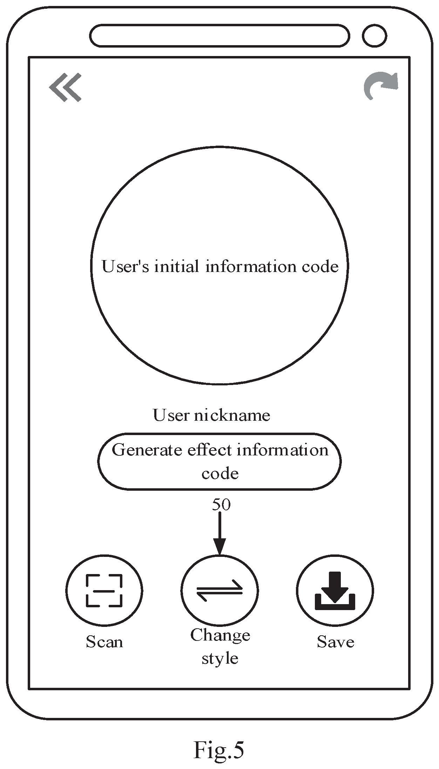

In this step, if the user triggers the effect information code function guide control in the effect information code function guide information, the information code display interface as shown in Fig. 5 is entered. Since the user generates the effect information code for the first time, the information code display interface includes the user's initial information code and a first information code update control 50 in a first style.

As shown in Fig. 5, the information code display interface is provided with a plurality of buttons such as "Scan", "Change style", "Save", and "Generate effect information code", where "Change style" or "Generate effect information code" may be regarded as the first information code update control 50 in the first style. On the information code display interface, the user may enter the subsequent process of generating the effect information code by triggering the "Change style" button or the "Generate effect information code" button. In addition, if the user has a need to scan information codes of other users to achieve a corresponding purpose, the user may also click the "Scan" button to scan information codes of other users. The user may also trigger the "Save" button to save the initial information code currently displayed into a local album of the device or a local album of the current preset application.

Here, it should be noted that in an actual implementation, the user may enter the information code display interface at any possible interface, as long as the interface displays an entry to the information code display interface, for example, any interface that displays a user information code identification (here, it refers to a symbol representing the user's personal information code). In addition to the personal information page, the entry to the information code display interface may be displayed at any interface position that reflects personal information, such as a media content page posted by the user and an interface for posting evaluation information.

S203: displaying an effect information code generation interface in response to a trigger operation on the first information code update control.

In this step, the user may enter the effect information code generation interface by triggering the first information code update control 50 on the information code display interface.

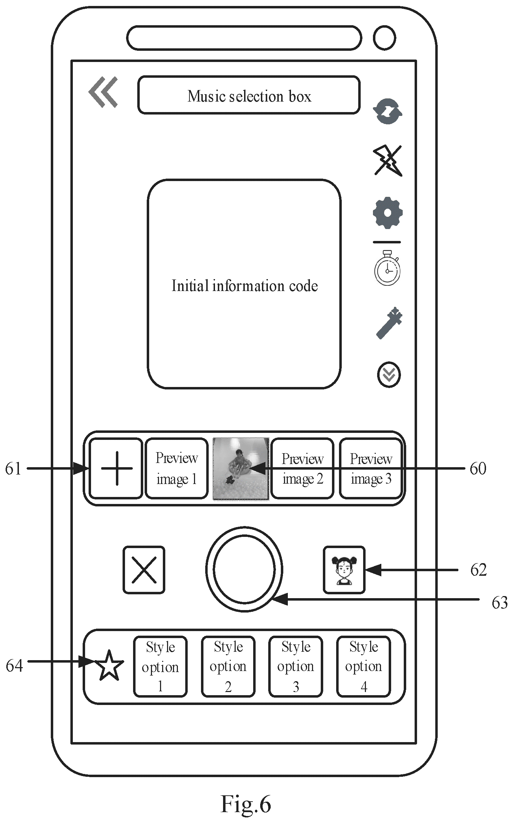

In the embodiment of the present disclosure, since the user generates the effect information code for the first time, the information code display interface includes the user's initial information code and the first information code update control in the first style. In a specific implementation, the "Generate effect information code" button and the "Change style" button on the information code display interface as shown in Fig. 5 are both the first information code update controls, where the "Change style" button is the first information code update control 50 in the first style; by triggering either of them, the user may enter the effect information code generation interface as shown in Fig. 6.

As shown in Fig. 6, a user information code display area is provided on the effect information code generation interface, and an information code currently used by the user may be displayed in this area. In addition, an image selection area is also provided on the effect information code generation interface, and a plurality of first preview images are displayed in the image selection area, and the user may select among them to determine a target image for generating a first effect information code, an image 60 as shown in Fig. 6 being a preview image of the target image selected by the user; where, the first preview images may be image information pre-saved locally by the user, and may also be image information pre-saved by the user in the current preset application. It should be noted that since the first preview images here are in the form of thumbnails, in order to ensure the image quality, an original image of a target first preview image may be used as the target image; the original image of the target first preview image has a higher resolution and contains more details and pixels than the target first preview image.

In addition, a plurality of style options are also displayed on the effect information code generation interface, and the user may select a target style option that meets his/her own needs or preferences from the plurality of style options, and determine a style attribute corresponding to the target style option based on the target style option, so as to generate the first effect information code corresponding to the target style option according to identification information corresponding to the initial information code and the determined style attribute. A favorite button 64 is also provided in a style option control, and the user may collect the style option currently used by triggering the button, or may view at least one style option that has been collected and select the at least one collected style option by triggering the button.

In addition, an image selection control 61 and an image selection control 62 are also provided on the effect information code generation interface, and a specific implementation process of them will be introduced in detail in S204 and will not be repeated here.

In a possible implementation, in the case that the user does not select a target image from the pre-saved image information, the user may also take a target image that meets the user's expectations by triggering an effect information code generation button on the effect information code generation interface, and a specific implementation process of this will be introduced in detail in S204 and will not be repeated here.

S204: obtaining identification information corresponding to the initial information code of the current user in the preset application and the target image that is determined by the current user on the effect information code generation interface and used for generating the effect information code.

In this step, data information corresponding to the initial information code of the user in the current preset application and the target image determined by the user on the effect information code generation interface may be obtained to generate the first effect information code.

In the embodiment of the present disclosure, the identification information corresponding to the initial information code may be obtained to generate the first effect information code. Exemplarily, the identification information corresponding to the initial information code may be in the form of encoded data, so that after the user selects the target image, the identification information and the target image are fused based on the target style option selected by the user, and then the final first effect information code is obtained.

In the embodiment of the present disclosure, the image selection area is provided on the effect information code generation interface as shown in Fig. 6, and a plurality of first preview images are displayed in the image selection area, and the user may select a target image from them for the subsequent generation of the first effect information code.

In a specific implementation, the user may select a target first preview image for the subsequent effect information code generation from the plurality of first preview images displayed in the image selection area. It should be noted that since the first preview images here are in the form of thumbnails, in order to ensure the image quality of the first effect information code generated subsequently, an original image of the target first preview image may be used as the target image; the original image of the target first preview image has a higher resolution and contains more details and pixels than the target first preview image.

In the embodiment of the present disclosure, a plurality of first preview images are displayed in the image display area, but due to the limitation of the current device screen size, the plurality of first preview images may not be displayed completely. In this case, the user may perform a slide switching operation in the image selection area to achieve the update display of the first preview images, and the user may then determine the target image based on the update display of the first preview images.

In the embodiment of the present disclosure, the image selection control is also provided on the effect information code generation interface, and the user may trigger the display of a plurality of second preview images by clicking the image selection control, where the plurality of second preview images include the plurality of first preview images and at least one other preview image; the user may determine the target image for generating the first effect information code based on the plurality of second preview images.

In a specific implementation, the user may trigger the display of a plurality of second preview images by clicking an image selection control 61 ("+" button) or an image selection control 62 (thumbnail on the right of the effect information code generation control) on the effect information code generation interface, so as to complete the determination of the target image among the plurality of second preview images. Exemplarily, the image selection control 62 as shown in Fig. 6 may be in the form of a thumbnail, and the latest saved image in the images pre-saved by the user may be displayed in the image selection control in the form of a thumbnail. It should be noted that when the plurality of second preview images are displayed, it may be in the form of a pop-up window, or the current effect information code generation interface may be switched to display a corresponding second preview image selection interface.

In a possible implementation, in the case that the user does not select a target image from the first preview images and/or the second preview images, an effect information code generation button 63 on the effect information code generation interface may be used as a shooting button.

Exemplarily, the user may trigger the button to enter a target image shooting mode, and trigger again to shoot the current scene to obtain a target image that meets the user's expectations. During shooting, the user may use a plurality of option buttons on the effect information code generation interface to achieve a variety of settings related to the target image, so as to obtain the target image that meets the user's expectations. For example, a lens flip button on the effect information code generation interface may be triggered to switch between front and rear cameras, a flash setting button may be clicked to switch the flash between on and off states, a countdown setting button may be clicked to set a shooting countdown time, and a setting button may also be clicked to complete the settings related to other attributes or aspects of the target image. After the target image that meets the user's expectations is obtained by shooting, if the user thinks that the current target image obtained by shooting may be further optimized, the user may also use a filter setting button on the effect information code generation interface to change the filter of the target image obtained by shooting, or may click an option expansion button to open more setting options for the target image, and perform corresponding settings and modifications on the target image, such as cropping, rotation, etc., so as to obtain the target image that meets the user's expectations.

It should be noted that the plurality of option buttons on the above effect information code generation interface only appear as a possible implementation of this embodiment, and should be subject to the actual situation in a practical application, and the embodiments of the present disclosure do not specifically limit the arrangement, form, function, etc. of the plurality of option buttons on the effect information code generation interface.

S205: obtaining and displaying a first effect information code generated based on the initial information code and the target image in response to a second trigger operation on the effect information code generation interface, an image of the first effect information code being obtained by performing stylization processing on the target image based on the identification information corresponding to the initial information code.

In this step, after the user completes the selection of the target image, by triggering an effect information code generation control on the effect information code generation interface, the background of the current preset application is instructed to generate and display the first effect information code based on the target image and the obtained identification information corresponding to the initial information code, where an image feature of the first effect information code is obtained by performing stylization processing on the target image based on the identification information corresponding to the initial information code.

In a specific implementation, a plurality of style options may be displayed on the effect information code generation interface, and when performing the stylization processing on the target image based on the identification information corresponding to the initial information code, a style attribute corresponding to a target style option may be determined in response to the user determining the target style option from the plurality of style options; the stylization processing is performed on the target image based on the identification information corresponding to the initial information code and the style attribute. Here, the style attribute corresponding to the style option may indicate various style types, such as a real person style, an animation style, a 3D style, etc., and may also indicate attribute features that affect the image appearance entry, such as a richness of image feature points (a simple style or a complex style, etc.). Further, a processing degree of the style effect may also be provided to meet different needs of the user.

For example, the user may select a target style option that meets the user's requirements from a plurality of style options below the effect information code generation interface as shown in Fig. 6; where, the plurality of style options may include any style such as a " anime style", a "cyberpunk style", and an "ancient Chinese style", etc. Due to the limitation of the current device screen size, there may be cases where the plurality of style options cannot be displayed completely. In this case, the user may perform a slide operation in the style option area to update the style options currently displayed. In addition, a favorite button is also provided in the style option control, and the user may collect the style option currently used by triggering the button, or may view at least one style option that has been collected and select the at least one collected style option by triggering the button.

In the embodiment of the present disclosure, the first effect information code is obtained according to the identification information corresponding to the initial information code and the stylized target image.

In a specific implementation, after the user completes the selection of the target style option, the corresponding style attribute may be determined based on the target style option. Further, the stylization processing may be performed on the target image according to the identification information corresponding to the initial information code and the determined style attribute; the stylized target image is used for the subsequent step of generating the first effect information code.

In addition, the identification information corresponding to the initial information code may be encoded data information. After receiving the user's trigger operation on the effect information code generation control on the effect information code generation interface, the obtained encoded data information corresponding to the initial information code is stylized and fused with the target image to obtain the first effect information code that meets the target style option selected by the user. The first effect information code obtained in this way contains the identification information corresponding to the initial information code, that is, contains data information that may be obtained by scanning the initial information code.

In the embodiment of the present disclosure, when the user triggers the effect information code generation control on the effect information code generation interface, the generation of the first effect information code is started. Exemplarily, when the user triggers the effect information code generation control, the user's current information code and the selected target image are displayed, and during the generation process, the generation progress of the first effect information code is displayed in real time.

After the generation of the first effect information code is completed, the interface as shown in Fig. 7 may be displayed. In this interface, the generated first effect information code may be displayed; or the same option buttons in this interface as in the effect information code generation interface may be used to set the generated first effect information code in a corresponding dimension, so as to obtain the first effect information code that meets the user's expectations.

In the embodiment of the present disclosure, a plurality of candidate first effect information codes may also be generated and displayed based on the initial information code and the target image first, and at this time, images of the plurality of candidate first effect information codes may be obtained by performing different types of stylization processing on the target image based on the identification information corresponding to the initial information code. The user may select a target effect information code from the plurality of candidate first effect information codes and use the target effect information code as the first effect information code.

S206: posting media content in the preset application based on the first effect information code and/or updating associated information of the current user in the preset application based on the first effect information code.

In this step, after the first effect information code is generated, the media content may be posted in the current preset application based on the first effect information code and/or the personal information code of the current user in the current preset application may be updated based on the first effect information code.

In the embodiment of the present disclosure, save indication information may be displayed in the interface as shown in Fig. 7, and the user may save the obtained first effect information code in the historical effect information code through a corresponding save trigger operation.

In a specific implementation, the save indication information may indicate saving by triggering, in accordance with a target trigger mode, the effect information code generation control on the effect information code generation interface. At this time, in order to avoid a conflict with the original function for generating the effect information code of the effect information code generation control, the indicated target trigger mode is different from the trigger mode of the second trigger operation for triggering the generation of the effect information code. For example, the user may be instructed to save the generated first effect information code into the historical effect information code of the user on the current information posting interface by performing a long press on or sliding the effect information code generation control on the current interface.

In addition, there may be other manners to trigger the saving, such as directly triggering the save indication information to save the first effect information code; or automatically saving the first effect information code into the user's historical effect information code after the first effect information code is generated.

The presentation manner of the save indication information may be a prompt box as shown in Fig. 7, or any other display form such as a pop-up window, which is subject to the actual application as long as the function may be implemented, and is not limited in the embodiments of the present disclosure.

In the embodiment of the present disclosure, after the effect information code is generated, the setting indication information may also be displayed synchronously to indicate that the obtained first effect information code is set as the personal information code of the user in the current preset application.

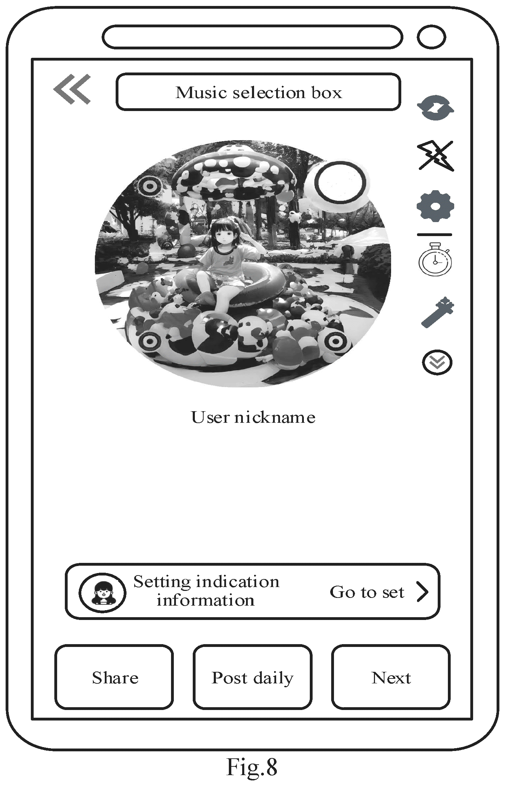

In the embodiment of the present disclosure, after the first effect information code is saved, the first effect information code display interface as shown in Fig. 8 may be displayed, and the user may trigger a "Next" button in this interface to enter the posting interface of the first effect information code. In addition, the user may also trigger a "Music selection box" at upper portion of the interface to select corresponding audio information, and the selected audio information will be used as the background music in the posted media content. The candidate audio information may be audio information pre-saved by the user, or may be audio information provided by the current preset application.

In a specific implementation, after the first effect information code is generated on the effect information code generation interface, the setting indication information may be displayed. Specifically, the setting indication information and the generated first effect information code may be displayed synchronously on the effect information code generation interface, or the setting indication information may be displayed in the interface as shown in Fig. 8 after the first effect information code is generated. The user may trigger a "Go to set" button in the setting indication information to set the generated first effect information code as the personal information code of the user in the preset application. In addition, the setting may also be performed on the media content display page after the first effect information code is posted, and the specific implementation process will be described in detail below and will not be repeated here.

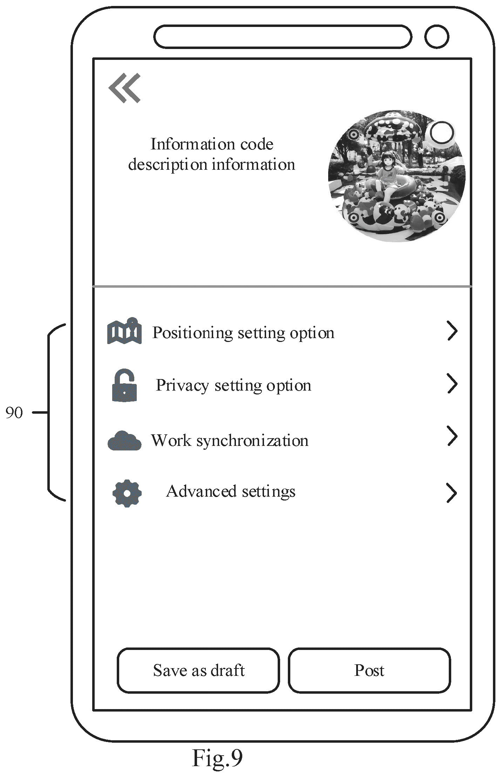

Fig. 9 shows the posting interface of the first effect information code. This interface includes posting attribute information 90 (such as positioning settings, etc.) for the first effect information code and information code description information (such as the posted title). In this interface, the location information of the current user and the posting attribute information such as whether the media content is made public to a specific group of people may be set, and the corresponding information code description information may also be modified in the current interface. After completing the relevant settings, the "Post" button in the interface may be clicked to post the current media content containing the posting attribute information for the first effect information code and the information code description information in the current preset application.

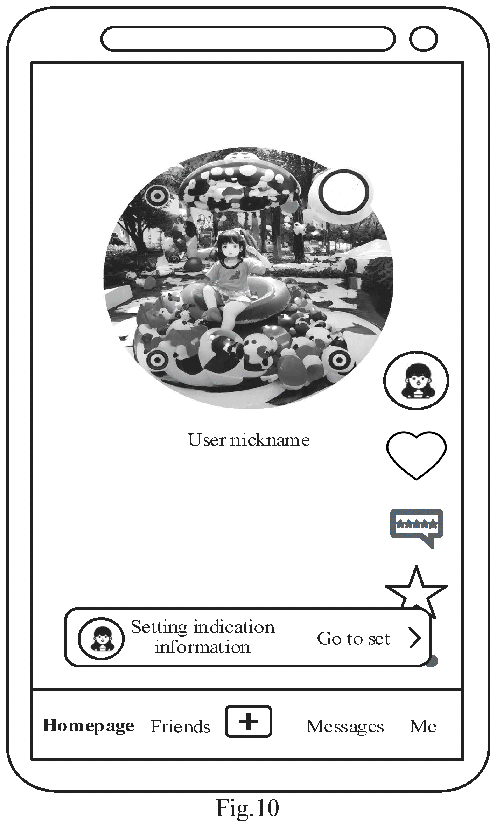

In the embodiment of the present disclosure, after the media content containing the first effect information code is successfully posted, the media content display page as shown in Fig. 10 is displayed. Exemplarily, the setting indication information may also be displayed on the media content display page as shown in Fig. 10, and the user may also trigger the "Go to set" button in the setting indication information to set the currently generated first effect information code as the personal information code in the preset application. It should be noted that the presentation manner of the setting indication information may be a prompt box as shown in Fig. 10, or any other display form such as a pop-up window, which is subject to the actual application as long as the function may be implemented, and is not limited in the embodiments of the present disclosure.

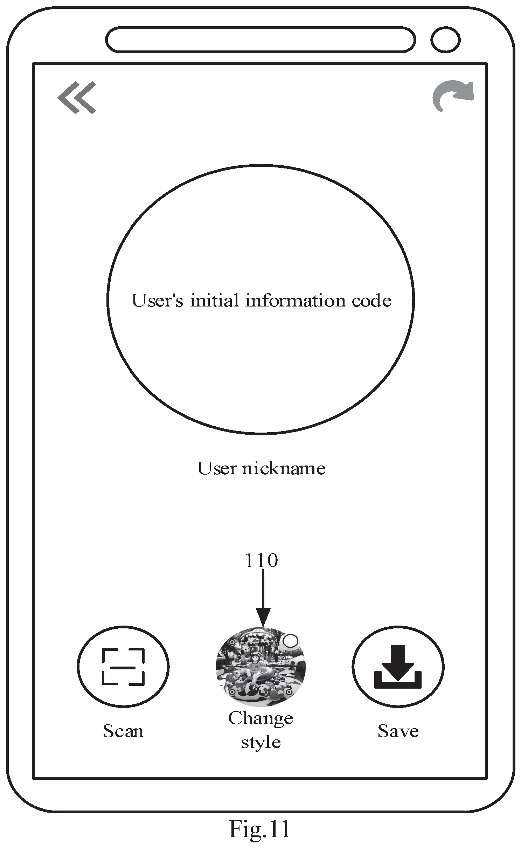

In the embodiment of the present disclosure, after the "Go to set" button is triggered, the information code display interface as shown in Fig. 11 may be entered, and this interface includes an effect information code update control 110 in a second style which, compared with the first information code update control in the first style, may be a thumbnail of the generated first effect information code.

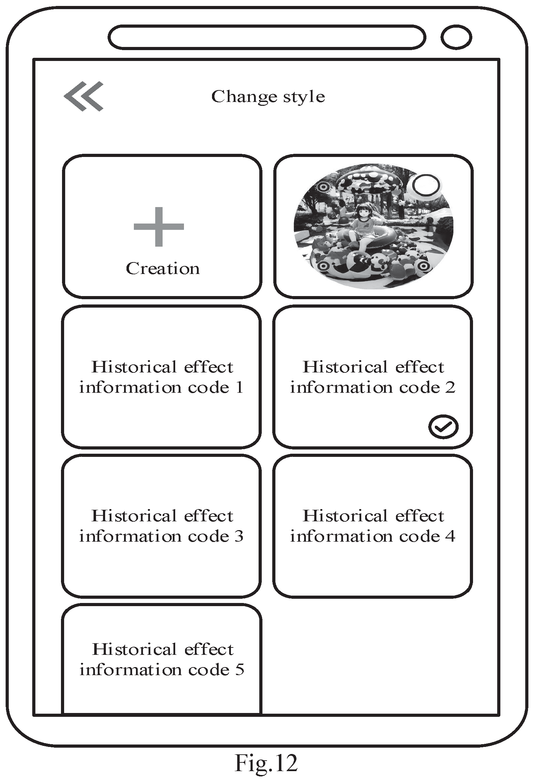

In a specific implementation, the user may enter the information code selection interface as shown in Fig. 12 by triggering the effect information code update control in the second style as shown in Fig. 11, that is, the "Change style" button in this interface. The user may select the generated first effect information code on the information code selection interface to set it as the personal information code of the user in the current preset application. In the embodiment of the present disclosure, an effect information code creation control and generated and/or saved historical effect information codes are displayed on the information code selection interface, where the historical effect information codes include the newly generated first effect information code. In addition, the user may trigger the creation control to generate the corresponding effect information code again, and the specific process will be described in detail in an embodiment and will not be repeated here.

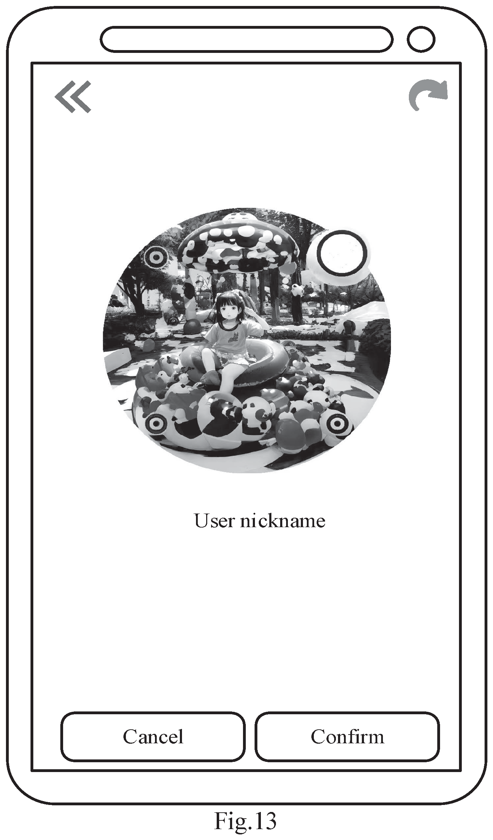

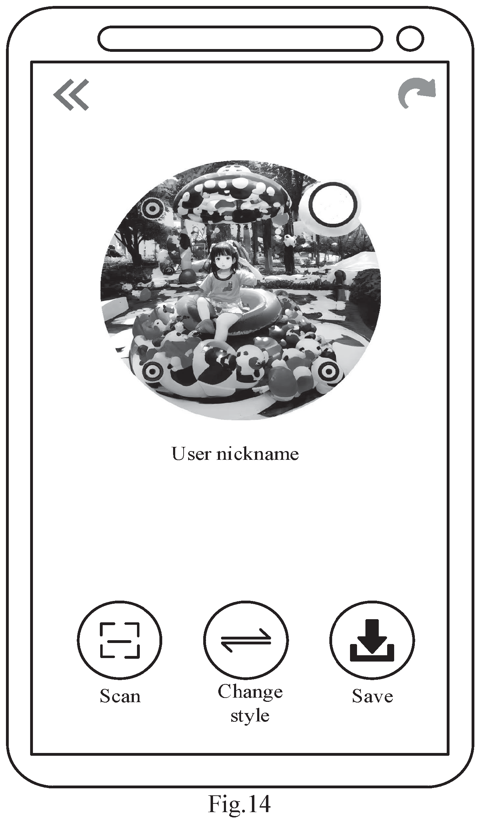

Exemplarily, after the user completes the selection on the information code selection interface, the preview interface as shown in Fig. 13 will be displayed, and the user may preview the effect of setting the current first effect information code as the personal information code in this interface. If the user is satisfied with the preview effect, the user may click the "Confirm" button in this interface to complete the setting of the personal information code. After the "Confirm" button is triggered, the interface as shown in Fig. 14 may be displayed, in which the first effect information code set by the user and the first information code update control in the first style are displayed. The user may re-enter the information code selection interface by triggering the update control to change the style of the current personal information code, and the specific process will be described in detail in an embodiment and will not be repeated here.

This embodiment is described by taking the case where the personal information page of the preset application is used as the effect information code function entry and the user uses the effect information code function "not for the first time" as an example.

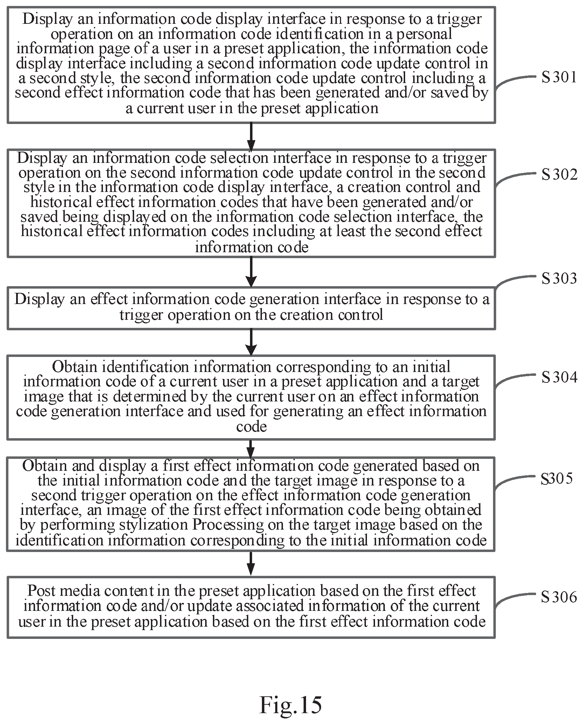

Fig. 15 is a flowchart of an information code generation method according to an embodiment of the present disclosure. The method includes steps S301 to S306.

S301: displaying an information code display interface in response to a trigger operation on an information code identification in a personal information page of a user in a preset application, the information code display interface including a second information code update control in a second style, the second information code update control including a second effect information code that has been generated and/or saved by a current user in the preset application.

In the embodiment of the present disclosure, it corresponds to the user triggering the generation of the effect information code from the personal information page not for the first time.

In this step, if the user has a need to change the current personal information code, the user may enter the information code display interface as shown in Fig. 14 by triggering the information code identification on the personal information page, and the user's current personal information code and the second information code update control in the second style are displayed on the information code display interface; where, the user's personal information code on the information display interface may be the initial information code (the user has generated the effect information code before but has not set it as the personal information code), and may also be the set effect information code. It should be noted that the presentation style of the second information code update control is a thumbnail of the effect information code generated and/or saved by the user in the preset application, for example, it may be the latest effect information code generated by the user, and may also be the effect information code selected and displayed by the user.

S302: displaying an information code selection interface in response to a trigger operation on the second information code update control in the second style in the information code display interface, a creation control and historical effect information codes that have been generated and/or saved being displayed on the information code selection interface, the historical effect information codes including at least the second effect information code.

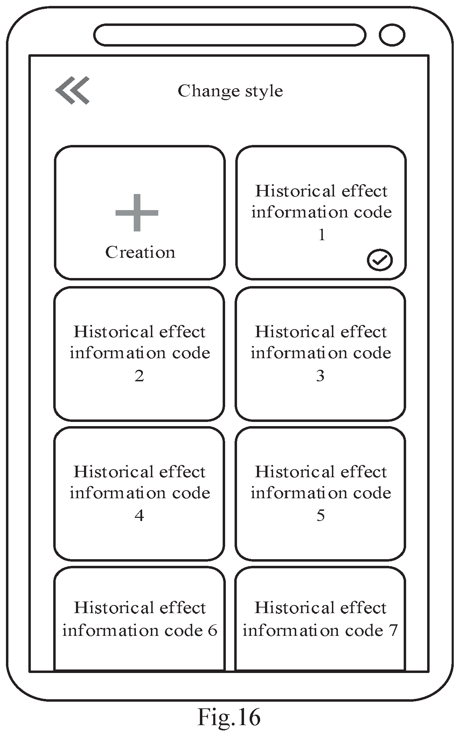

In this step, the user may enter the information code selection interface as shown in Fig. 16 by triggering the second information code update control in the second style on the information code display interface. On the information code selection interface in the embodiment of the present disclosure, an effect information code creation control and a plurality of historical effect information codes are displayed. The plurality of historical effect information codes here may include the effect information code that the user has selected to save after being generated historically, and may also include the effect information code that the user has not actively selected to save after being generated historically.

Exemplarily, a plurality of historical effect information codes generated historically by the user are displayed on the information code selection interface as shown in Fig. 16, and the user may select a target effect information code on the information code selection interface as the personal information code in the preset application. If the user has a need to generate a new effect information code, the user may trigger the creation control on the information code selection interface to generate the new effect information code, and the specific implementation process will be described in detail in S303 and will not be repeated here.

S303: displaying an effect information code generation interface in response to a trigger operation on the creation control.

In this step, the user may enter the effect information code generation interface as shown in Fig. 6 by triggering the creation control on the information code selection interface as shown in Fig. 16 to generate a new effect information code. For the specific implementation of the effect information code generation interface and subsequent operations, see S203 above, which will not be repeated here.

In addition, if the user has a need to change the current personal information code in the preset application, the user may also select a corresponding historical effect information code from the historical effect information codes on the information code selection interface as shown in Fig. 16 as the personal information code in the preset application.

S304: obtaining identification information corresponding to an initial information code of a current user in a preset application and a target image that is determined by the current user on an effect information code generation interface and used for generating an effect information code.

For the description of this step, see S204 above, which will not be repeated here.

S305: obtaining and displaying a first effect information code generated based on the initial information code and the target image in response to a second trigger operation on the effect information code generation interface, an image of the first effect information code being obtained by performing stylization processing on the target image based on the identification information corresponding to the initial information code.

For the description of this step, see S205 above, which will not be repeated here.

S306: posting media content in the preset application based on the first effect information code and/or updating associated information of the current user in the preset application based on the first effect information code.

For the description of this step, see S206 above, which will not be repeated here.

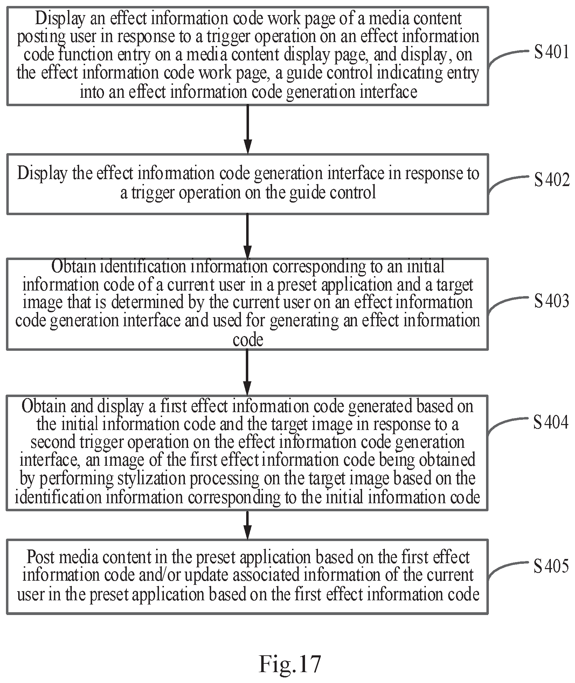

Fig. 17 is a flowchart of an information code generation method according to an embodiment of the present disclosure. The method includes steps S401 to S405.

S401: displaying an effect information code work page of a media content posting user in response to a trigger operation on an effect information code function entry on a media content display page, and displaying, on the effect information code work page, a guide control indicating entry into an effect information code generation interface.

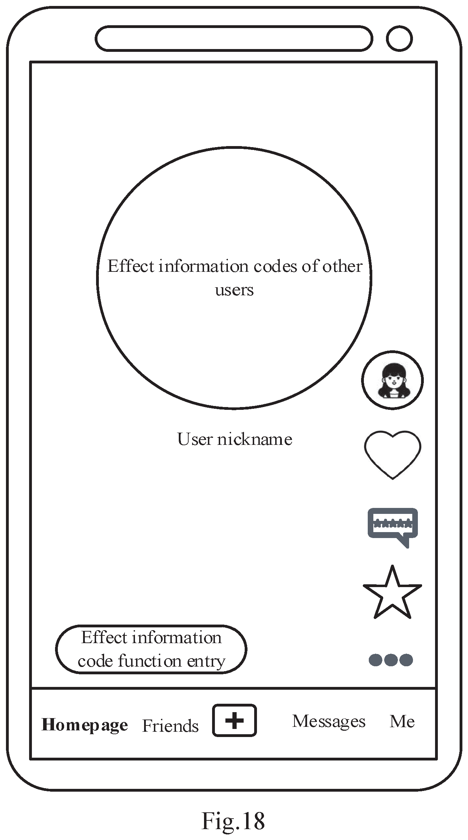

In this step, the user may trigger the effect information code function entry on the media content display page in the media content display page as shown in Fig. 18, and at this time, the effect information code work page may be entered.

It should be noted that in some other possible implementations, after the effect information code function entry on the media content display page is triggered, the effect information code generation interface as shown in Fig. 6 may be directly displayed without entering the effect information code work page. Alternatively, after the effect information code function entry on the media content display page is triggered, other interfaces (such as a guide interface) may be entered first and then the effect information code display interface may be entered.

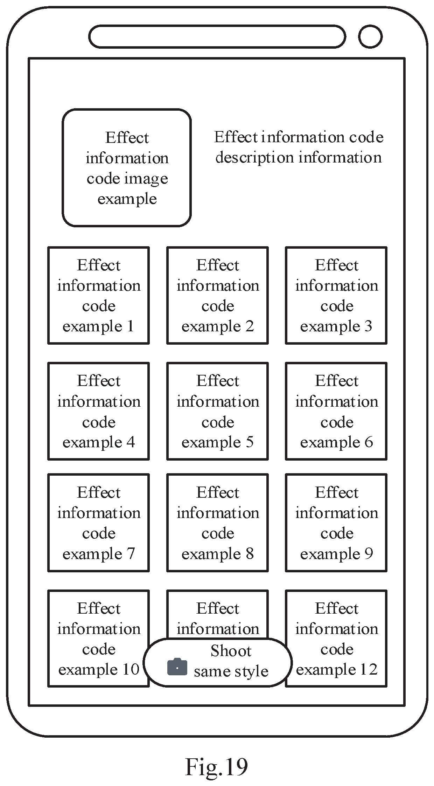

In the embodiment of the present disclosure, the media content display page may be a display interface corresponding to media content containing an effect information code anchor posted by other users browsed by the user in the current preset application, and may also be a display interface corresponding to media content containing an effect information code anchor posted by the user himself/herself. The user may enter the effect information code work page as shown in Fig. 19 or directly enter "shoot the same style" by triggering the effect information code anchor on the media content display interface, that is, perform the subsequent effect information code generation process.

As shown in Fig. 19, an effect information code image example, effect information code description information, a plurality of effect information codes generated by users in the current preset application, and the guide control indicating entry into the effect information code generation interface, that is, a "Shoot the same style" button, are displayed on the effect information code work page. It should be noted here that the effect information code image example on the effect information code work page may be the effect information code displayed on the corresponding media content display page before the user triggers to enter the effect information code work page, and may also be the effect information code that conforms to the current user's preference and is determined according to the user's historical browsing data in the current preset application, that is, the effect information code image example on the effect information code work page may be determined based on any manner, which is not limited in the embodiment of the present disclosure.

In a specific implementation, the user may browse effect information codes generated by other users in the current preset application on the effect information code work page as shown in Fig. 19, and if the user has a need to generate an effect information code, the user may trigger the "Shoot the same style" button on the effect information work page to perform the subsequent effect information code generation process.

S402: displaying the effect information code generation interface in response to a trigger operation on the guide control.

In this step, the user may enter the effect information code generation interface as shown in Fig. 6 by triggering the "Shoot the same style" button on the effect information work page. For the specific implementation of the effect information code generation interface, see S203 above, which will not be repeated here.

S403: obtaining identification information corresponding to an initial information code of a current user in a preset application and a target image that is determined by the current user on an effect information code generation interface and used for generating an effect information code.

For the description of this step, see S204 above, which will not be repeated here.

S404: obtaining and displaying a first effect information code generated based on the initial information code and the target image in response to a second trigger operation on the effect information code generation interface, an image of the first effect information code being obtained by performing stylization processing on the target image based on the identification information corresponding to the initial information code.

For the description of this step, see S205 above, which will not be repeated here.

S405: posting media content in the preset application based on the first effect information code and/or updating associated information of the current user in the preset application based on the first effect information code.

For the description of this step, see S206 above, which will not be repeated here.

It may be understood by those skilled in the art that, in the above methods of specific implementations, the writing sequence of the steps does not mean that a strict execution sequence constitutes any limitation on the implementation process, and the specific execution sequence of the steps should be determined by the functions and possible internal logic.

Based on the same inventive concept, the embodiments of the present disclosure further provide an information code generation apparatus corresponding to the information code generation method. Since the principle of the apparatus for solving problems in the embodiments of the present disclosure is similar to the information code generation method in the embodiments of the present disclosure, the implementation of the apparatus may refer to the implementation of the method, and the repeated parts will not be repeated.

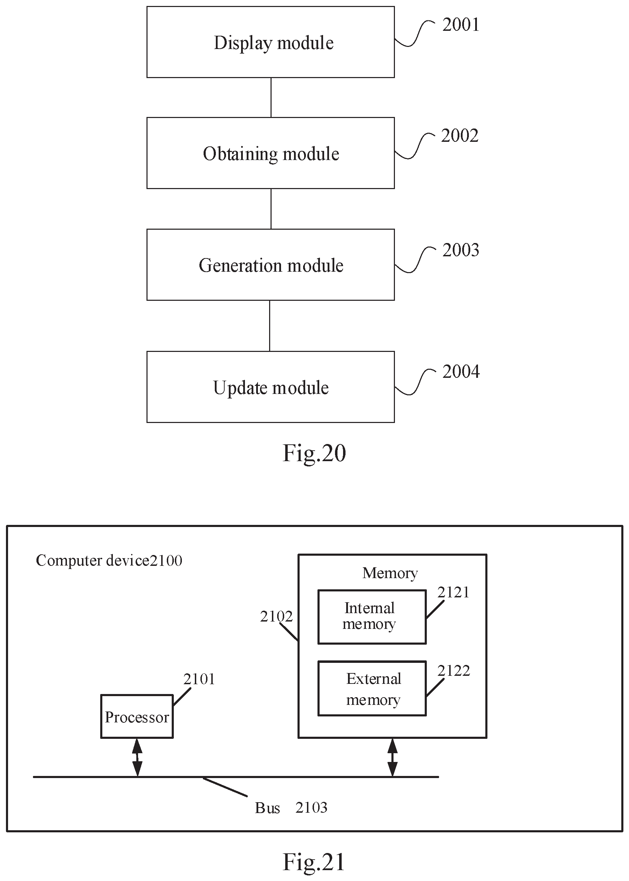

Fig. 20 is a schematic architecture diagram of an information code generation apparatus according to an embodiment of the present disclosure. The apparatus includes: a display module 2001, an obtaining module 2002, a generation module 2003, and an update module 2004.

The display module 2001 is configured to display an effect information code generation interface in response to a first trigger operation on a preset interface of a preset application.

The obtaining module 2002 is configured to obtain identification information corresponding to an initial information code of a current user in the preset application and a target image that is determined by the current user on the effect information code generation interface and used for generating an effect information code.

The generation module 2003 is configured to obtain and display a first effect information code generated based on the initial information code and the target image in response to a second trigger operation on the effect information code generation interface, an image of the first effect information code being obtained by performing stylization processing on the target image based on the identification information corresponding to the initial information code.

The update module 2004 is configured to post media content in the preset application based on the first effect information code and/or update associated information of the current user in the preset application based on the first effect information code.

In a possible implementation, an image selection area is displayed on the effect information code generation interface, and a plurality of first preview images are displayed in the image selection area; and specifically, the obtaining module 2002 is configured to:

determine a target first preview image selected by a user from the plurality of first preview images displayed in the image selection area, and use an original image corresponding to the target first preview image as the target image.

In a possible implementation, the obtaining module 2002 is further configured to:
update, in response to a slide switching operation in the image selection area, the first preview image that is displayed.

In a possible implementation, an image selection control is further displayed on the effect information code generation interface, and specifically, the obtaining module 2002 is configured to:
display a plurality of second preview images in response to a trigger operation on the image selection control, the plurality of second preview images including the plurality of first preview images and at least one other preview image; and
determine a target second preview image selected by the user from the plurality of second preview images, and use an original image corresponding to the target second preview image as the target image.

In a possible implementation, an effect information code generation control is displayed on the effect information code generation interface, and the second trigger operation is a trigger operation on the effect information code generation control.

In a possible implementation, specifically, the generation module 2003 is configured to:
determine a style attribute corresponding to a target style option in response to a user determining the target style option from the plurality of style options; and
perform the stylization processing on the target image based on the identification information corresponding to the initial information code and the style attribute.

In a possible implementation, the preset interface includes a personal information page of the user in the preset application, and specifically, the display module 2001 is configured to:
display the effect information code generation interface in response to the first trigger operation on the preset interface of the preset application, including:
display the effect information code generation interface in response to a trigger operation on an information code identification on the personal information page.

In a possible implementation, the preset interface includes an information code display interface, the information code display interface including the initial information code and a first information code update control in a first style, the first information code update control being configured to display the effect information code generation interface after being triggered, and specifically, the display module 2001 is configured to:
display the effect information code generation interface of the user in response to a trigger operation on the first information code update control.

In a possible implementation, the display module 2001 is further configured to:
display effect information code function guide information in response to meeting a target guide condition, the effect information code function guide information being configured to guide a user to enter the effect information code generation interface or the information code display interface.

In a possible implementation, the preset interface includes an information code display interface, the information code display interface including a second information code update control in a second style, the second information code update control including a second effect information code that has been generated and/or saved by the current user in the preset application.

In a possible implementation, the display module 2001 is further configured to:
display an information code selection interface in response to a trigger operation on the second information code update control, a creation control and historical effect information codes that have been generated and/or saved being displayed on the information code selection interface, the historical effect information codes including at least the second effect information code; and
display the effect information code generation interface in response to a trigger operation on the creation control.

In a possible implementation, the display module 2001 is further configured to:
in response to a select and use operation on any historical effect information code, use the selected historical effect information code as the information code in the associated information of the user in the preset application.

In a possible implementation, the preset interface includes a media content display page, and specifically, the display module 2001 is configured to:
display the effect information code generation interface in response to a trigger operation on an effect information code function entry on the media content display page.

In a possible implementation, specifically, the display module 2001 is configured to:
display an effect information code work page of a media content posting user in response to the trigger operation on the effect information code function entry, and display, on the effect information code work page, a guide control indicating entry into the effect information code generation interface; and
display the effect information code generation interface in response to a trigger operation on the guide control.

In a possible implementation, specifically, the update module 2004 is configured to:
display a posting interface including the first effect information code, the posting interface being configured to obtain posting attribute information and/or information code description information; and
posting, in response to a posting trigger operation on the posting interface, the media content including the first effect information code according to information obtained on the posting interface.

In a possible implementation, the display module 2001 is further configured to:
display setting indication information for setting the information code in the associated information,
the setting indication information being configured to indicate setting the first effect information code as the information code in the associated information of the user in the preset application.

In a possible implementation, specifically, the display module 2001 is configured to:
display the setting indication information after generating the first effect information code on the effect information code generation interface; or
display the setting indication information on the media content display page after posting the media content including the first effect information code.

In a possible implementation, the display module 2001 is further configured to:
display save indication information indicating saving the first effect information code; and
save the first effect information code in the historical effect information code of the user in response to a save trigger operation.

In a possible implementation, the save indication information is configured to indicate saving by triggering, in accordance with a target trigger mode, the effect information code generation control on the effect information code generation interface, the target trigger mode being different from a trigger mode of the second trigger operation.

In a possible implementation, specifically, the generation module 2003 is configured to:
obtain and display a plurality of candidate first effect information codes generated based on the initial information code and the target image, images of the plurality of candidate first effect information codes being obtained by performing different types of stylization processing on the target image based on the identification information corresponding to the initial information code; and
determine a target effect information code selected by the user from the plurality of candidate first effect information codes, the target effect information code being configured as the effect information code when the media content is posted and/or the associated information is updated.

For the description of the processing flow of each module in the apparatus and the interaction flow between the modules, reference may be made to the relevant description in the above method embodiments, and details are not described herein again.

Corresponding to the information code generation method in Fig. 1, an embodiment of the present disclosure further provides a computer device 2100. As shown in Fig. 21, a schematic structural diagram of the computer device 2100 provided by the embodiment of the present disclosure includes:
a processor 2101, a memory 2102, and a bus 2103, the memory 2102 being configured to store executable instructions, including an internal memory 2121 and an external memory 2122; the internal memory 2121 here is also called a memory, which is used to temporarily store operation data in the processor 2101 and data exchanged with an external memory 2122 such as a hard disk, and the processor 2101 exchanges data with the external memory 2122 through the memory 2121. When the computer device 2100 is running, the processor 2101 communicates with the memory 2102 through the bus 2103, so that the processor 2101 executes the following instructions:
displaying an effect information code generation interface in response to a first trigger operation on a preset interface of a preset application;
obtaining identification information corresponding to an initial information code of a current user in the preset application and a target image that is determined by the current user on the effect information code generation interface and used for generating an effect information code;
obtaining and displaying a first effect information code generated based on the initial information code and the target image in response to a second trigger operation on the effect information code generation interface, an image of the first effect information code being obtained by performing stylization processing on the target image based on the identification information corresponding to the initial information code; and
posting media content in the preset application based on the first effect information code and/or updating associated information of the current user in the preset application based on the first effect information code.

An embodiment of the present disclosure further provides a computer-readable storage medium, a computer program being stored on the computer-readable storage medium, the computer program, when executed by a processor, causing the steps of the information code generation method described in the above method embodiments to be performed, or causing the steps of the information code generation method described in the above method embodiments to be performed. The storage medium may be a volatile or non-volatile computer-readable storage medium.

An embodiment of the present disclosure further provides a computer program product, the computer program product carrying program codes, the instructions included in the program codes being used to perform the steps of the information code generation method described in the above method embodiments, or perform the steps of the information code generation method described in the above method embodiments, which may be specifically referred to the above method embodiments, and details are not described herein again.

The above computer program product may be implemented specifically by hardware, software, or a combination thereof. In an optional embodiment, the computer program product is embodied as a computer storage medium, and in another optional embodiment, the computer program product is embodied as a software product, such as a software development kit (Software Development Kit, SDK), etc.

It may be clearly understood by those skilled in the art that, for the convenience and simplicity of description, for the specific working process of the systems and apparatuses described above, reference may be made to the corresponding process in the foregoing method embodiments, and details are not described herein again. In the several embodiments provided by the present disclosure, it should be understood that the disclosed systems, apparatuses, and methods may be implemented in other manners. The apparatus embodiments described above are only illustrative. For example, the module division is only logical function division and may be other division during actual implementation. For example, a plurality of modules or components may be combined or integrated into another system, or some features may be omitted or not implemented. In addition, other items shown or discussed as coupled, directly coupled, or communicating with each other may be indirectly coupled or communicating through some communication interface, apparatus, or module whether electrically, mechanically, or otherwise.

The modules described as separate parts may or may not be physically separate, and parts displayed as modules may or may not be physical modules, that is, they may be located at one position, or may be distributed on a plurality of network modules. Some or all of the modules may be selected according to actual needs to achieve the objectives of the solutions of the embodiments.

In addition, functional modules in the embodiments of the present disclosure may be integrated into one processing module, each of the modules may exist physically alone, or two or more modules may be integrated into one module.

If the functions are implemented in the form of software functional modules and sold or used as independent products, they may be stored in a non-volatile computer-readable storage medium executable by a processor. Based on this understanding, the technical solutions of the present disclosure essentially, or the part contributing to the prior art, or part of the technical solutions may be implemented in the form of a software product. The computer software product is stored in a storage medium and includes several instructions for causing a computer device (which may be a personal computer, a server, or a network device, etc.) to perform all or part of the steps of the method described in the embodiments of the present disclosure. The foregoing storage medium includes a medium that may store program codes, such as an USB flash disk, a mobile hard disk, a read-only memory (Read-Only Memory, ROM), a random access memory (Random Access Memory, RAM), a magnetic disk, or an optical disc.

Finally, it should be noted that the foregoing embodiments are merely specific implementations of the present disclosure, and are used to illustrate the technical solutions of the present disclosure, rather than limiting the protection scope of the present disclosure. Although the present disclosure has been described in detail with reference to the foregoing embodiments, those of ordinary skill in the art should understand that any person skilled in the art may still modify or easily conceive of changes to the technical solutions recited in the foregoing embodiments, or equivalently replace some of the technical features within the technical scope disclosed in the present disclosure. These modifications, changes, or substitutions do not make the essence of the corresponding technical solutions depart from the spirit and scope of the technical solutions of the embodiments of the present disclosure, and shall fall within the protection scope of the present disclosure. Therefore, the protection scope of the present disclosure shall be subject to the protection scope of the claims.

## Claims

1. A method for information code generation, comprising:
displaying an effect information code generation interface in response to a first trigger operation on a preset interface of a preset application;
obtaining identification information corresponding to an initial information code of a current user in the preset application, and a target image that is determined by the current user on the effect information code generation interface and configured for generating an effect information code;
obtaining and displaying a first effect information code generated based on the initial information code and the target image in response to a second trigger operation on the effect information code generation interface, wherein an image of the first effect information code is obtained by performing stylization processing on the target image based on the identification information corresponding to the initial information code; and
posting media content in the preset application based on the first effect information code and/or updating associated information of the current user in the preset application based on the first effect information code.

2. The method of claim 1, wherein an image selection area is displayed on the effect information code generation interface, and a plurality of first preview images are displayed in the image selection area; and
the obtaining a target image that is determined by the current user on the effect information code generation interface and configured for generating the effect information code comprises:
determining a target first preview image selected by the user from the plurality of first preview images displayed in the image selection area, and providing an original image corresponding to the target first preview image as the target image.

3. The method of claim 2, further comprising:
updating, in response to a slide switching operation in the image selection area, the first preview image that is displayed.

4. The method of claim 2, wherein an image selection control is further displayed on the effect information code generation interface; and
the determining the target image selected by the user on the effect information code generation interface and configured for generating the effect information code comprises:
displaying a plurality of second preview images in response to a trigger operation on the image selection control, wherein the plurality of second preview images comprise the plurality of first preview images and at least one other preview image; and
determining a target second preview image selected by the user from the plurality of second preview images, and providing an original image corresponding to the target second preview image as the target image.

5. The method of any of claims 1 to 4, wherein an effect information code generation control is displayed on the effect information code generation interface, and the second trigger operation is a trigger operation on the effect information code generation control.

6. The method of any of claims 1 to 5, wherein a plurality of style options are displayed on the effect information code generation interface, and the performing the stylization processing on the target image based on the identification information corresponding to the initial information code comprises:
determining a style attribute corresponding to a target style option in response to determining the target style option from the plurality of style options; and
performing the stylization processing on the target image based on the identification information corresponding to the initial information code and the style attribute.

7. The method of any of claims 1 to 6, wherein the preset interface comprises a personal information page of the user in the preset application; and
the displaying an effect information code generation interface in response to a first trigger operation on a preset interface of a preset application comprises:
displaying the effect information code generation interface in response to a trigger operation on an information code identification on the personal information page.

8. The method of any of claims 1 to 6, wherein the preset interface comprises an information code display interface, the information code display interface comprising the initial information code and a first information code update control in a first style, the first information code update control being configured to display the effect information code generation interface in response to being triggered; and
the displaying an effect information code generation interface in response to a first trigger operation on a preset interface of a preset application comprises:
displaying the effect information code generation interface of the user in response to a trigger operation on the first information code update control.

9. The method of claim 7 or 8, wherein before displaying the effect information code generation interface, the method further comprises:
displaying effect information code function guide information in response to meeting a target guide condition, wherein the effect information code function guide information is configured to guide the user to enter the effect information code generation interface or the information code display interface.

10. The method of any of claims 1 to 9, wherein the preset interface comprises an information code display interface, the information code display interface comprising a second information code update control in a second style, the second information code update control comprising a second effect information code that has been generated and/or saved by the current user in the preset application.

11. The method of claim 10, wherein the displaying an effect information code generation interface in response to a first trigger operation on a preset interface of a preset application comprises:
displaying an information code selection interface in response to a trigger operation on the second information code update control, wherein a creation control is displayed on the information code selection interface, and at least one of generated historical effect information codes or saved historical effect information codes is further displayed on the information code selection interface, the historical effect information codes comprising at least the second effect information code; and
displaying the effect information code generation interface in response to a trigger operation on the creation control.

12. The method of claim 11, further comprising:
in response to a select and use operation on any of the historical effect information code, providing the historical effect information code that is selected as an information code in the associated information of the user in the preset application.

13. The method of any of claims 1 to 12, wherein the preset interface comprises a media content display page; and
the displaying an effect information code generation interface in response to a first trigger operation on a preset interface comprises:
displaying the effect information code generation interface in response to a trigger operation on an effect information code function entry on the media content display page.

14. The method of claim 13, wherein the displaying the effect information code generation interface in response to a trigger operation on an effect information code function entry on the media content display page comprises:
displaying an effect information code work page of a media content poster in response to the trigger operation on the effect information code function entry, and displaying, on the effect information code work page, a guide control indicating entry into the effect information code generation interface; and
displaying the effect information code generation interface in response to a trigger operation on the guide control.

15. The method of any of claims 1 to 14, wherein the posting media content in the preset application based on the first effect information code comprises:
displaying a posting interface comprising the first effect information code, wherein the posting interface is configured to obtain posting attribute information and/or information code description information; and
posting, in response to a posting trigger operation on the posting interface, the media content comprising the first effect information code according to information obtained on the posting interface.

16. The method of any of claims 1 to 15, wherein after obtaining the first effect information code, the method further comprises:
displaying setting indication information for setting an information code in the associated information,
the setting indication information being configured to indicate setting the first effect information code as the information code in the associated information of the user in the preset application.

17. The method of claim 16, wherein the displaying setting indication information comprises:
displaying the setting indication information after generating the first effect information code on the effect information code generation interface; or
displaying the setting indication information on the media content display page after posting the media content comprising the first effect information code.

18. The method of any of claims 1 to 17, wherein after obtaining the first effect information code, the method further comprises:
displaying save indication information indicating saving the first effect information code; and
saving the first effect information code in the historical effect information code of the user in response to a save trigger operation.

19. The method of claim 18, wherein the save indication information is configured to indicate saving by triggering, in accordance with a target trigger mode, an effect information code generation control on the effect information code generation interface, the target trigger mode being different from a trigger mode of the second trigger operation.

20. The method of any of claims 1 to 19, wherein the obtaining and displaying a first effect information code generated based on the initial information code and the target image comprises:
obtaining and displaying a plurality of candidate first effect information codes generated based on the initial information code and the target image, images of the plurality of candidate first effect information codes being obtained by performing different types of stylization processing on the target image based on the identification information corresponding to the initial information code; and
determining a target effect information code selected by the user from the plurality of candidate first effect information codes, the target effect information code being configured as the effect information code based on which the media content is posted and/or the effect information code based on which the associated information is updated.

21. An information code generation apparatus, comprising:
a display module, configured to display an effect information code generation interface in response to a first trigger operation on a preset interface of a preset application;
an obtaining module, configured to obtain identification information corresponding to an initial information code of a current user in the preset application and a target image that is determined by the current user on the effect information code generation interface and configured for generating an effect information code;
a generation module, configured to obtain and display a first effect information code generated based on the initial information code and the target image in response to a second trigger operation on the effect information code generation interface, an image of the first effect information code being obtained by performing stylization processing on the target image based on the identification information corresponding to the initial information code; and
an update module, configured to post media content in the preset application based on the first effect information code and/or update associated information of the current user in the preset application based on the first effect information code.

22. A computer device, comprising: a processor, a memory, and a bus, the memory storing machine-readable instructions executable by the processor, the processor communicating with the memory through the bus when the computer device is running, the machine-readable instructions, when executed by the processor, causing the method of any of claims 1 to 20 to be performed.

23. A computer-readable storage medium, wherein a computer program is stored on the computer-readable storage medium, the computer program, when executed by a processor, causing the method of any of claims 1 to 20 to be performed.
